# EUROPÄISCHE PATENTSCHRIFT

(11) **EP 1 088 744 B1**
(45) Veröffentlichungstag und Bekanntmachung des Hinweises auf die Patenterteilung: **19.10.2005**
(21) Anmeldenummer: 00115255.2
(22) Anmeldetag: 14.07.2000
(51) Int. Cl.: B62D 15/02

(54) **Lenkwinkelsensor mit einer Codescheibe**
Steering angle sensor with code disk
Capteur de l'angle de braquage avec disque de code

(30) Priorität: 01.10.1999 DE 19947161
(43) Veröffentlichungstag der Anmeldung: 04.04.2001
(73) Patentinhaber: Valeo Schalter und Sensoren GmbH, 74321 Bietigheim-Bissingen (DE)
(72) Erfinder: Simonis, Karl, 74366 Kirchheim a.N. (DE); Klein, Rudolf, 74348 Lauffen a.N. (DE)
(74) Vertreter: Steimle, Josef

(56) Entgegenhaltungen:
- DE-A- 19 532 085
- DE-A- 19 601 965
- JP-A- 10 145 056
- US-A- 4 789 342
- US-A- 5 243 188
- "HEISSKANALTECHNIK BEIM MEHRKOMPONENTEN-SPRITZGIESSEN" PLASTVERARBEITER, ZECHNER UND HUETHIG VERLAG GMBH. SPEYER/RHEIN, DE, Bd. 45, Nr. 10, 1. Oktober 1994 (1994-10-01), Seiten 22,24-25, XP000477133 ISSN: 0032-1338

## Beschreibung

Die Erfindung betrifft einen Lenkwinkelsensor mit einer Codescheibe, mit einem an der Codescheibe ortsfest angeordneten Auslöseelement, welches zur Schaltung eines Zählwerkes zur Zählung der Umdrehungen der Codescheibe vorgesehen ist, und mit einer Auflagefläche an der Codescheibe zur Auflage des Auslöseelements, wobei die Codescheibe und das Auslöseelement aus unterschiedlichen Kunststoffkomponenten sind und die Kunststoffkomponente des Auslöseelements aus einem weicheren Kunststoff als die der Codescheibe ist.

Solche bekannte Lenkwinkelsensoren mit einem Auslöseelement auf der Codescheibe sind beispielsweise aus der

DE 196 01 965 A1 bekannt geworden. Das Auslöseelement schaltet dabei bei einer vollen Umdrehung der Codescheibe ein Zählwerk, insbesondere ein Zahnrad, um einen Zählschritt weiter. Die Codescheibe ist dabei vorzugsweise als Kreisscheibe ausgestaltet, welche um das Lenkrohr eines Fahrzeugs angeordnet ist, und mit dem Lenkrohr drehfest verbunden ist. Das Auslöseelement befindet sich vorzugsweise an dem Umfang einer solchen Codescheibe. Nachteil eines solchen Standes der Technik ist, dass die Weiterschaltung des Zählwerks, also insbesondere des Zahnrades, Geräusche verursacht. Zur Reduzierung der Geräusche ist es bekannt, das Auslöseelement aus einer weicheren Kunststoffkomponente als die Codescheibe zu fertigen, vorzugsweise aus einem Elastomer. Die Verbindung der beiden Kunststoffkomponenten wird bei solchen Lenkwinkelsensoren dadurch realisiert, dass die Codescheibe in einem Werkzeug gespritzt wird. Danach wird das Werkzeug gewechselt, um in einem anderen Werkzeug das Auslöseelement an die Auflagefläche an der Codescheibe anzuspritzen. Insbesondere durch den Wechsel des Werkzeuges sowie der Verwendung zwei verschiedener Werkzeuge entstehen hohe Herstellungs- und Werkzeugkosten.

Der vorliegenden Erfindung liegt deshalb die Aufgabe zugrunde, einen Lenkwinkelsensor bereitzustellen, der auf einfache und kostengünstige Art und Weise herstellbar ist.

Zur Lösung der Aufgabe wird ein Lenkwinkelsensor der eingangs beschriebenen Art vorgeschlagen, der vorsieht, dass die Kontur der Auflagefläche der parallel zu der Auflagefläche angeordneten Oberfläche des Auslöseelements entspricht.

Ein derartig gekennzeichneter Lenkwinkelsensor weist gegenüber dem Stand der Technik den Vorteil auf, dass er in lediglich einem Werkzeug hergestellt werden kann. Damit entfallen die hohen Kosten für ein weiteres Werkzeug nach dem Stand der Technik. Durch die gleiche Kontur der Auflagefläche sowie der parallel zu der Auflagefläche angeordneten Oberfläche des Auslöseelements kann zur Herstellung des Auslöseelements ein in die Werkzeughohlform eingeführter und verschiebbarer Schieber mit der entsprechenden Kontur so verschoben werden, dass nach dem Spritzgießen der Codescheibe ein Hohlraum für das Auslöseelement bereitgestellt werden kann.

Bei einer Weiterbildung der Erfindung ist vorgesehen, dass die Flächenausdehnung der Auflagefläche der Flächenausdehnung der parallel zu der Auflagefläche angeordneten Oberfläche des Auslöseelements entspricht. Vorteilhafterweise wird hier die Auflagefläche ebenso wie die parallel zu der Auflagefläche angeordneten Oberfläche des Auslöseelements von ein und dem gleichen Werkzeugteil, nämlich dem Schieber, erzeugt.

Bei einer besonders bevorzugten Ausgestaltung der Erfindung weist die Auflagefläche Vertiefungen, Aussparungen und/oder Durchbrüche auf. Damit kann eine mechanische Verzahnung des Auslöseelements mit der Codescheibe erreicht werden.

Eine andere Ausführungsform der Erfindung zeichnet sich dadurch aus, dass das Auslöseelement die Codescheibe von wenigstens zwei Seiten abschnittsweise umschließt. Durch ein solches Umschließen der Codescheibe kann das Auslöseelement auf einfache und funktionssichere Art und Weise an der Codescheibe angeordnet werden.

Bei einer besonders bevorzugten Ausführungsform der Erfindung weist das Auslöseelement eine Zahnlücke und zwei Mitnahmezähne auf. Diese Ausgestaltungsform eignet sich besonders dafür, ein Zählwerk, welches ein Zahnrad zur Zählung der Umdrehungen der Codescheibe aufweist, um einen gewissen Winkel beim Passieren des Auslöseelements weiterzudrehen.

Zur Lösung der eingangs genannten Aufgabe wird außerdem ein Verfahren mit den Merkmalen des Anspruchs 6 vorgeschlagen.

Ein solches Verfahren weist insbesondere den Vorteil auf, dass die so hergestellten Lenkwinkelsensoren auf einfache Art und Weise kostengünstig und dennoch funktionssicher hergestellt werden können. Je nach Ausgestaltung und definierter Rückziehposition des Schiebers kann ein entsprechendes Auslöseelement realisiert werden. Zur Herstellung des Auslöseelements muss nicht, wie nach dem Stand der Technik, das Werkzeug gewechselt werden.

Bei einer besonders bevorzugten Ausgestaltung des Verfahrens ist vorgesehen, dass der Verfahrensschritt d) vorgenommen wird, bevor die Codescheibe abgekühlt ist. Dadurch kann zu der mechanischen Verbindung eine bessere chemische Verbindung des Auslöseelements mit der Codescheibe erzeugt werden.

Eine andere Ausgestaltungsform der Erfindung sieht vor, dass zwei Schieber vorhanden sind, die im Wesentlichen entlang paralleler Achsen angeordnet sind und in Verfahrensschritt a) bzw. d) in entgegengesetzter Richtung eingefahren bzw. zurückgezogen werden. Vorteilhafterweise kann damit der für das Auslöseelement vorgesehene Hohlraum von zwei Seiten der Codescheibe geschaffen werden. Dadurch kann eine günstigere mechanische wie auch chemische Verbindung des Auslöseelements mit der Codescheibe realisiert werden.

Bei einer Weiterbildung des erfindungsgemäßen Verfahrens berühren sich die beiden Schieber in Verfahrensschritt a). Durch ein solches Berühren der Schieber können beispielsweise Hohlräume oder Durchbrüche in der Codescheibe erzeugt werden, in welche die Kunststoffkomponente des Auslöseelements zur besseren Befestigung an der Codescheibe eingespritzt werden kann.

Bei einer Variante der Erfindung weist wenigstens einer der beiden Schieber an der dem anderen Schieber zugewandten Seite wenigstens einen Vorsprung auf. Durch einen solchen Vorsprung entstehen definierte Hohlräume, welche ebenfalls zu einer verbesserten Verbindung des Auslöseelements mit der Codescheibe führen können.

Bei einer diesbezüglichen Weiterbildung der Erfindung sind zwei kreiszylindrische Vorsprünge vorhanden. Gerade eine solche Ausbildungsform hat sich in der Praxis als besonders vorteilhaft erwiesen.

Eine Vorrichtung zur Durchführung des beschriebenen Verfahrens kann dadurch gekennzeichnet sein, dass wenigstens ein in dem Werkzeughohlraum eingreifbarer, verschiebbarer Schieber vorhanden ist. Ein solcher Schieber dient erfindungsgemäß dazu, wie bereits beschrieben, einen Hohlraum für das Auslöseelement in dem Werkzeughohlraum auszusparen.

Es können zwei im Wesentlichen entlang paralleler Achsen verschiebbare Schieber vorhanden sein. Dadurch können Hohlräume auf beiden Seiten der Codescheibe erzeugt werden, wodurch eine bessere Anbringung des Auslöseelements an der Codescheibe erzeugt werden kann.

Bei einer Weiterbildung der Vorrichtung ist vorgesehen, dass wenigstens einer der beiden Schieber an der dem anderen Schieber zugewandten Seite wenigstens einen Vorsprung aufweist. Durch einen solchen Vorsprung können entsprechende Konturen in der Codescheibe realisiert werden.

Vorzugsweise sind zwei kreiszylindrische Vorsprünge vorhanden, wodurch eine besonders gute Anbringung des Auslöseelements an der Codescheibe möglich ist.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: einen Ausschnitt eines Lenkwinkelsensors mit einer Codescheibe und mit einer Auflagefläche,
- Figur 2: den Ausschnitt nach Figur 1 mit einem Auslöseelement,
- Figur 3: die Draufsicht auf den Ausschnitt nach Figur 2,
- Figur 4: einen Längsschnitt entlang der Linie A/A nach Figur 3,
- Figur 5: einen Längsschnitt entsprechend Figur 4 durch ein Werkzeug einer Spritzgussvorrichtung mit eingefahrenen Schiebern und
- Figur 6: eine Vorrichtung nach Figur 5 mit zurückgezogenen Schiebern.

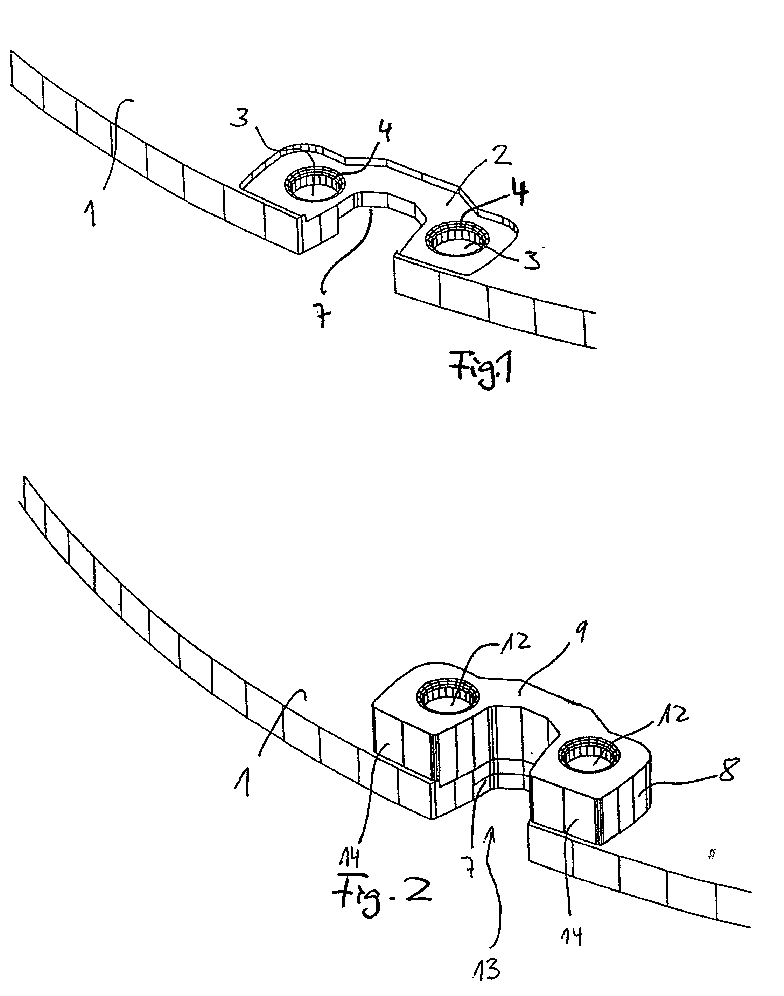

In der Figur 1 ist ein Ausschnitt eines Lenkwinkelsensors gezeigt, nämlich eine Codescheibe 1, die eine kreisscheibenförmige Grundscheibe aufweist. Im Umfangsbereich der Codescheibe 1 ist dabei eine in die Codescheibe 1 eingelassene Auflagefläche 2 vorgesehen. Die Auflagefläche 2 dient zur Auflage eines in Figur 1 nicht dargestellten Auslöseelements. Des Weiteren weist die Auflagefläche 2 zwei kreiszylindrische Durchbrüche 3 auf, welche zur besseren Verzahnung des Auslöseelements auf der Codescheibe 1 vorgesehen sind. Die Kante 4 zwischen der Auflagefläche 2 und dem Mantel des kreiszylindrischen Durchbruchs 3 ist abgerundet ausgeführt. Auf der der Auflagefläche 2 abgewandten Seite der Codescheibe 1 ist ebenfalls eine in die Codescheibe 1 eingelassene Gegenfläche 7 vorhanden, welche zur Ausfüllung und damit zur besseren mechanischen Verzahnung des Auslöseelements auf der Codescheibe 1 vorgesehen ist.

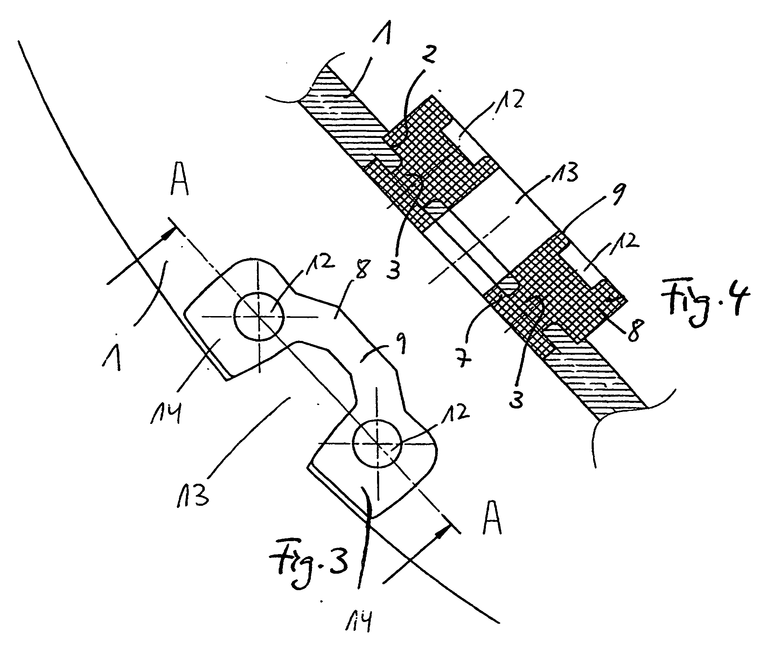

In Figur 2 ist der Ausschnitt des Lenkwinkelsensors nach Figur 1 mit einem Auslöseelement 8 dargestellt. Die Codescheibe 1 und das Auslöseelement 8 sind dabei aus unterschiedlichen Kunststoffkomponenten, wobei die Kunststoffkomponente des Auslöseelements 8 aus einem weicheren Kunststoff als die der Codescheibe 1 ist. Beim Vergleich der Figuren 1 und 2 ist deutlich zu erkennen, dass die Kontur der Auflagefläche 2 einer parallel zu der Auflagefläche 2 angeordneten Oberfläche 9 des Auslöseelements 8 entspricht. Die in Figur 1 deutlich zu erkennenden beiden Durchbrüche 3 sind in Figur 2 als zwei kreiszylindrische Vertiefungen 12 in der Oberfläche 9 des Auslöseelements 8 vorhanden. Außerdem entspricht die Flächenausdehnung der Auflagefläche 2 nach Figur 1 der Flächenausdehnung der parallel zu der Auflagefläche 2 angeordneten Oberfläche 9 des Auslöseelements 8 nach Figur 2. In Figur 2 wird weiterhin deutlich, dass die in die Codescheibe 1 eingelassene Gegenfläche 7 ebenfalls von der Kunststoffkomponente des Auslöseelements 8 vollständig ausgefüllt ist.

Das Auslöseelement 8 ist zur Schaltung eines Zählwerks zur Zählung der Umdrehungen der Codescheibe vorgesehen. Ein solches Zählwerk weist insbesondere ein ortsfest angeordnetes Zahnrad auf, welches bei jeweils einer vollen Umdrehung der Codescheibe durch eine Zahnlücke 13 und zwei Mitnahmezähne 14 des Auslöseelements 8 um einen Zählschritt verdreht wird. Um dieses Eingreifen der Mitnahmezähne 14 bzw. der Zahnlücke 13 in das Zahnrad des Zählwerks möglichst geräuscharm auszuführen, ist die Kunststoffkomponente des Auslöseelements 8 aus einem relativ weichen Kunststoff.

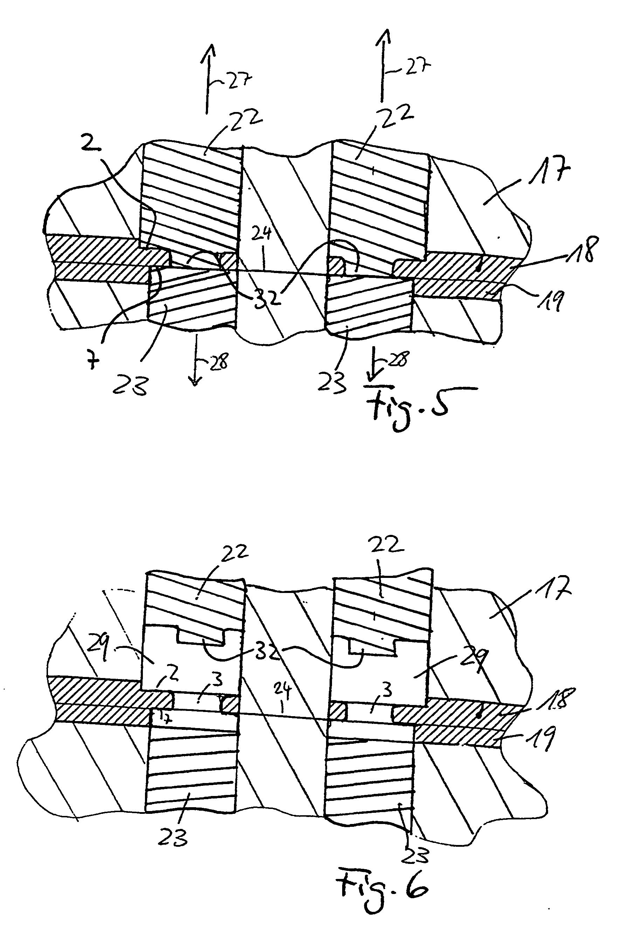

In Figur 3 ist der Ausschnitt des Lenkwinkelsensors nach Figur 2 in Draufsicht gezeigt. Deutlich zu erkennen ist das Auslöseelement 8 mit den beiden Vertiefungen 12 sowie die Zahnlücke 13 mit den beiden Mitnahmezähnen 14.

Die Figur 4 zeigt den Längsschnitt entlang der Linie A/A nach Figur 3. Deutlich dargestellt ist die Auflagefläche 2 des Auslöseelements 8, die beiden Durchbrüche 3 sowie die Gegenfläche 7. Das Auslöseelement 8 füllt dabei die Durchbrüche 3 sowie den Raum zwischen der Gegenfläche 7 und der der Auflagefläche 2 abgewandten Oberfläche der Codescheibe 1. Damit umschließt das Auslöseelement 8 die Codescheibe 1 abschnittsweise von zwei Seiten.

Aus Figur 4 wird außerdem ebenfalls deutlich, dass die Kontur der Auflagefläche 2 der parallel zu der Auflagefläche 2 angeordneten Oberfläche 9 des Auslöseelements 8 entspricht.

Die Figur 5 zeigt einen Ausschnitt aus einer Vorrichtung zur Herstellung eines erfindungsgemäßen Lenkwinkelsensors. Gezeigt ist ein mehrteiliges Werkzeug 17 mit einem Werkzeughohlraum 18, in welchen die Kunststoffkomponente 19 der Codescheibe 1 eingespritzt ist. In den Werkzeughohlraum 18 ist dabei von der Auflagefläche 2 her ein Schieber 22 mit zwei fest miteinander verbundenen Schieberarmen eingeschoben. Außerdem ist ein weiterer Schieber 23 vorhanden, dessen beide miteinander verbundenen Schieberarme von der Gegenfläche 7 her in den Werkzeughohlraum 18 eingreifen. Der Schieber 22 bzw. 23 kann dabei entlang dem Pfeil 27 bzw. 28 zurückgezogen werden.

Die Figur 6 zeigt solch eine zurückgezogene Position der beiden Schieber 22 und 23. Durch Zurückziehen der beiden Schieber 22 und 23 entsteht in dem Werkzeug 17 ein Hohlraum 29, der in Größe und Form dem Mitnahmelement 8 entspricht. Durch Einspritzen einer Kunststoffkomponente in diesen Hohlraum 29 erhält man das Auslöseelement 8. Um eine bessere mechanische Verbindung des Auslöseelements 8 mit der Codescheibe 1 zu erhalten ist vorgesehen, dass die Kunststoffkomponente des Auslöseelements 8 in den Hohlraum 29 eingespritzt wird, bevor die Kunststoffkomponente 19 der Codescheibe vollständig abgekühlt ist.

Wie in Figur 5 deutlich zu erkennen ist, berühren sich die beiden Schieber 22 und 23 in der Trennebene 24. Der Schieber 22 weist dabei an der dem Schieber 23 zugewandten Seite zwei kreiszylindrische Vorsprünge 32 auf. Die Vorsprünge 32 erzeugen die kreiszylindrischen, in Figur 1 und Figur 6 dargestellten, Durchbrüche 3 in der Codescheibe 1.

Nach Einspritzen der Kunststoffkomponente für das Auslöseelement 8 in den Hohlraum 29 kann das Werkzeug 17 geöffnet und die Codescheibe 1 samt Auslöseelement 8 ausgeworfen werden.

## Patentansprüche

1. Lenkwinkelsensor mit einer Codescheibe (1), mit einem an der Codescheibe (1) ortsfest angeordneten Auslöseelement (8), welches zur Schaltung eines Zählwerks zur Zählung der Umdrehungen der Codescheibe (1) umgeben ist, und mit einer Auflagefläche (2) an der Codescheibe (1) zur Auflage des Auslöseelements (8), wobei die Codescheibe und das Auslöseelement (8) aus unterschiedlichen Kunststoffkomponenten sind und die Kunststoffkomponenete des Auslöseelements (8) aus einem weicheren Kunststoff als die der Codescheibe (1) ist, **dadurch gekennzeichnet, dass** die Kontur der Auflagefläche (2) der parallel zu der Auflagefläche (2) angeordneten Oberfläche (9) des Mitnahmelements (8) entspricht.

2. Lenkwinkelsensor nach Anspruch 1, **dadurch gekennzeichnet, dass** die Flächenausdehnung der Auflagefläche (2) der Flächenausdehnung der parallel zu der Auflagefläche angeordneten Oberfläche (9) des Mitnahmelements (8) entspricht.

3. Lenkwinkelsensor nach Anspruch 1 oder 2, **dadurch gekennzeichnet, dass** die Auflagefläche (2) Vertiefungen, Aussparungen und/oder Durchbrüche (3) aufweist (mechanische Verzahnung).

4. Lenkwinkelsensor nach Anspruch 1, 2 oder 3, **dadurch gekennzeichnet, dass** das Auslöseelement (8) die Codescheibe (1) von wenigstens zwei Seiten abschnittsweise umschließt.

5. Lenkwinkelsensor nach einem der vorhergehenden Ansprüche, **dadurch gekennzeichnet, dass** das Auslöseelement (8) eine Zahnlücke (13) und zwei Mitnahmezähne (14) aufweist.

6. Verfahren zur Herstellung von Lenkwinkelsensoren nach einem der vorhergehenden Ansprüche, mit einer Spritzgußvorrichtung, mit einem mehrteiligen Werkzeug (17) und mit wenigstens einem in die von dem mehrteiligen Werkzeug (17) umgebenen Werkzeughohlraum (18) eingreifbaren Schieber (22, 23), **gekennzeichnet durch** folgende Verfahrensschritte:
a) Einfahren des wenigstens einen Schiebers in den Werkzeughohlraum (18),
b) Spritzen der Codescheibe (1) **durch** Spritzen der härteren Kunststoffkomponente in den Werkzeughohlraum (18),
c) Zurückziehen des wenigstens einen Schiebers (22, 23) in eine definierte Position,
d) Spritzen des Auslöseelements (8) **durch** Spritzen der weicheren Kunststoffkomponente in den **durch** das Zurückziehen entstandenen Hohlraum (29).
e) Öffnen der Werkzeugform (17) und Auswerfen der Codescheibe (1) mit Auslöseelement (8).

7. Verfahren nach Anspruch 6, **dadurch gekennzeichnet, dass** der Verfahrensschritt d) vorgenommen wird, bevor die Codescheibe (1) abgekühlt ist.

8. Verfahren nach Anspruch 6 oder 7, **dadurch gekennzeichnet, dass** zwei Schieber (22, 23) vorhanden sind, die im Wesentlichen entlang einer parallelen Achse angeordnet sind und in Verfahrensschritt a) bzw. d) in entgegengesetzter Richtung eingefahren bzw. zurückgezogen werden.

9. Verfahren nach Anspruch 6, 7 oder 8, **dadurch gekennzeichnet, dass** sich die beiden Schieber (22, 23) in Verfahrenschritt a) berühren.

10. Verfahren nach einem der Ansprüche 6 bis 9, **dadurch gekennzeichnet, dass** wenigstens einer der beiden Schieber (22) an der dem anderen Schieber (23) zugewandten Seite wenigstens einen Vorsprung aufweist.

11. Verfahren nach Anspruch 10, **dadurch gekennzeichnet, dass** zwei kreiszylindrische Vorsprünge (32) vorhanden sind.

## Claims

1. Steering angle sensor having a code disc (1), having a release element (8) which is arranged in a stationary manner on the code disc (1) and is surrounded for switching a counter for counting the revolutions of the code disc (1), and having a seating surface (2) on the code disc (1) for seating the release element (8), the code disc and the release element (8) comprising different plastic components, and the plastic component of the release element (8) comprising a softer plastic than that of the code disc (1), **characterized in that** the contour of the seating surface (2) corresponds to that surface (9) of the driver element which is arranged parallel to the seating surface (2).

2. Steering angle sensor according to Claim 1, **characterized in that** the area of the seating surface (2) corresponds to the area of that surface (9) of the driver element (8) which is arranged parallel to the seating surface.

3. Steering angle sensor according to Claim 1 or 2, **characterized in that** the seating surface (2) has indentations, recesses and/or passages (3) (mechanical tooth system).

4. Steering angle sensor according to Claim 1, 2 or 3, **characterized in that** the release element (8) encloses the code disc (1) in sections on at least two sides.

5. Steering angle sensor according to any of the preceding Claims, **characterized in that** the release element (8) has a tooth space (13) and two driver teeth (14).

6. Method for the production of steering angle sensors according to any of the preceding Claims, comprising an injection moulding apparatus, comprising a multi-part mould (17) and comprising at least one slide (22, 23) which can reach into the mould cavity (18) surrounded by the multi-part mould (17), **characterized by** the following method steps:
a) introduction of the at least one slide into the mould cavity (18),
b) injection of the code disc (1) by injection of the harder plastic component into the mould cavity (18),
c) withdrawal of the at least one slide (22, 23) to a defined position,
d) injection of the release element (8) by injection of the softer plastic component into the cavity (29) formed by the withdrawal,
e) opening of the mould (17) and ejection of the code disc (1) with release element (8).

7. Method according to Claim 6, **characterized in that** the method step d) is carried out before the code disc (1) has cooled.

8. Method according to Claim 6 or 7, **characterized in that** two slides (22, 23) are present which are arranged substantially along a parallel axis and are introduced or withdrawn in process step a) or d), respectively, in opposite directions.

9. Method according to Claim 6, 7 or 8, **characterized in that** the two slides (22, 23) touch one another in method step a).

10. Method according to any of Claims 6 to 9, **characterized in that** at least one of the two slides (22) has at least one projection on the side facing the other slide (23).

11. Method according to Claim 10, **characterized in that** two cylindrical projections (32) are present.

## Revendications

1. Capteur d'angle de braquage comprenant un disque à code (1), un élément de déclenchement (8) disposé de façon fixe sur le disque à code (1), qui est entouré pour l'enclenchement d'un compteur pour le comptage des rotations du disque à code (1), et une surface d'appui (2) sur le disque à code (1) pour l'appui de l'élément de déclenchement (8), le disque à code et l'élément de déclenchement (8) étant à base de différents composants plastique et le composant plastique de l'élément de déclenchement (8) étant à base d'un plastique plus souple que celui du disque à code (1), **caractérisé en ce que** le contour de la surface d'appui (2) correspond à la surface (9), disposée parallèlement à la surface d'appui (2), de l'élément d'entraînement (8).

2. Capteur d'angle de braquage selon la revendication 1, **caractérisé en ce que** l'extension de surface de la surface d'appui (2) correspond à l'extension de surface de la surface (9), disposée parallèlement à la surface d'appui, de l'élément d'entraînement (8).

3. Capteur d'angle de braquage selon la revendication 1 ou 2, **caractérisé en ce que** la surface d'appui (2) présente des cavités, des évidements et/ou des percements (3) (denture mécanique).

4. Capteur d'angle de braquage selon la revendication 1, 2 ou 3, **caractérisé en ce que** l'élément de déclenchement (8) entoure le disque à code (1) par au moins deux côtés par endroits.

5. Capteur d'angle de braquage selon l'une quelconque des revendications précédentes, **caractérisé en ce que** l'élément de déclenchement (8) présente un entredent (13) et deux dents d'entraînement (14).

6. Procédé pour la fabrication de capteurs d'angle de braquage selon l'une quelconque des revendications précédentes, comprenant un dispositif de moulage par injection, un outil (17) en plusieurs parties et au moins un coulisseau (22, 23) pouvant être engagé dans la cavité d'outil (18) entourée par l'outil (17) en plusieurs parties, **caractérisé par** les étapes de procédés suivantes :
a) entrée du au moins un coulisseau dans la cavité d'outil (18),
b) moulage par injection du disque à code (1) par projection du composant plastique plus dur dans la cavité d'outil (18),
c) recul du au moins un coulisseau (22, 23) dans une position définie,
d) moulage par injection de l'élément de déclenchement (8) par pulvérisation du composant plastique plus souple dans la cavité (29) formée par le recul.
e) ouverture du moule d'outil (17) et éjection du disque à code (1) avec l'élément de déclenchement (8).

7. Procédé selon la revendication 6, **caractérisé en ce que** l'étape du procédé d) est effectuée avant que le disque à code (1) soit refroidi.

8. Procédé selon la revendication 6 ou 7, **caractérisé en ce que** deux coulisseaux (22, 23) sont présents, lesquels sont disposés sensiblement le long d'un axe parallèle et sont entrés ou reculés dans l'étape de procédé a) ou d) dans le sens opposé.

9. Procédé selon la revendication 6, 7 ou 8, **caractérisé en ce que** les deux coulisseaux (22, 23) se touchent lors de l'étape de procédé a).

10. Procédé selon l'une quelconque des revendications 6 à 9, **caractérisé en ce qu'**au moins l'un des deux coulisseaux (22) présente au moins une saillie sur le côté tourné vers l'autre coulisseau (23).

11. Procédé selon la revendication 10, **caractérisé en ce que** deux saillies (32) cylindriques circulaires sont présentes.
